# EUROPÄISCHE PATENTSCHRIFT

(11) **EP 0 392 634 B1**
(45) Veröffentlichungstag und Bekanntmachung des Hinweises auf die Patenterteilung: **22.06.1994**
(21) Anmeldenummer: 90200890.3
(22) Anmeldetag: 11.04.1990
(51) Int. Cl.: F24D 19/10, F24H 9/12

(54) **Beheizbarer Brauchwasserspeicher**
Heatable domestic water storage
Accumulateur d'eau sanitaire chauffant

(30) Priorität: 13.04.1989 AT 872/89
(43) Veröffentlichungstag der Anmeldung: 17.10.1990
(73) Patentinhaber: Joh. Vaillant GmbH u. Co., 42810 Remscheid (DE); n.v. Vaillant s.a., 1620 Drogenbos (BE); VAILLANT S.A.R.L, 94537 Rungis Cedex (FR); VAILLANT Ges.m.b.H, 1233 Wien (AT); Vaillant Ltd., Rochester Kent ME2 4EZ (GB); Vaillant B.V., 1105 BJ Amsterdam (NL); Vaillant GmbH, 8953 Dietikon 1 (CH)
(72) Erfinder: Bechem, Herbert, D-5600 Wuppertal 23 (DE); Demski, Frank-Michael, D-4630 Bochum 6 (DE); Uckelmann, Winfried, D-4440 Rheine 11 (DE)
(74) Vertreter: Heim, Johann-Ludwig, Dipl.-Ing.

(56) Entgegenhaltungen:
- US-A- 3 213 850
- US-A- 3 251 346
- US-A- 3 258 005

## Beschreibung

Die Erfindung bezieht sich auf einen beheizbaren Brauchwasserspeicher gemäß den Oberbegriffen der nebengeordneten Patentansprüche.

Ein solcher Wasserspeicher ist bekanntgeworden aus der US-A 3 213 850, dessen Speicherbehälter im oberen Bereich einteilig ausgebildet ist. Im unteren Bereich ist der Speicherbehälter durch einen eingesetzten Boden abgeschlossen, aus dem das Flammrohr, den Speicherraum nach oben durchsetzend, abgeht und durch den oberen Bereich hindurchtritt. Der Speicherbehälter ist von einem nur angedeuteten Gehäuse umgeben, durch das nach oben das Flammrohr und eine Warmwasservorlaufleitung hindurchtreten. Eine Kaltwasserzulaufleitung geht seitlich sowohl durch das Gehäuse wie auch durch den Speicherbehälter, desgleichen die Zweigleitung. Das den Wasserdurchtritt durch die Zweigleitung steuernde Ventil ist im Zwischenraum zwischen Speicherbehälter und Gehäuse angeordnet.

Weiterhin ist aus der US-PS 3 251 346 ein beheizbarer Brauchwasserspeicher bekanntgeworden, der gleichfalls im oberen Bereich des Wasserbehälters einstückig mit einer Art Deckel versehen ist, wobei im unteren Bereich des Speicherbehälters dieser durch einen gesondert einsetzbaren Boden verschlossen ist, von dem das Flammrohr ausgeht, das den oberen Bereich des Speichers durchsetzt. Durch den oberen Bereich des Speichers ragt ein Warmwasservorlaufrohr und ein Kaltwasserzulaufrohr, wobei dieses im oberen Bereich des Speichers mit einer thermisch gesteuerten Drossel versehen ist. Eine gesonderte Zweigleitung und ein Ventil, das diese steuert, ist nicht vorhanden, weiterhin auch nicht ein gesonderter Speicherdeckel und auch kein Gehäuse.

Schließlich behandelt die US-PS 3 258 005 einen brennstoffbeheizten Speicher, der einteilig mit dem Speicherbehälter einen oberen Abschluß aufweist, während der untere Abschluß durch einen gesondert einsetzbaren Boden gebildet ist, von dem das den Speicherinnenraum durchsetzende Flammrohr abgeht, das den oberen Bereich des Speichers durchsetzt. In den oberen Bereich des Speichers sind ein Warmwasservorlaufrohr und ein Kaltwasserzulaufrohr von oben her eingesetzt, die auch einen gesonderten Gehäusedeckel durchsetzen. Das Kaltwasserzulaufrohr weist ein thermisch gesteuertes Ventil auf, aber keine Zweigleitung.

Bei in rascher Folge wiederholten Zapfungen aus einem solchen Speicherbehälter kann es zu einem Anstieg der Temperatur des gezapften Wassers auf eine oberhalb eines zulässigen Grenzwertes, zum Beispiel oberhalb 80 °C, unzulässige Höhe kommen.

Weist der Kaltwasserzulauf zwecks Bekämpfung dieses Problems im oberen Bereich des Speicherraumes Bohrungen auf, verschlechtert dies die sogenannte Auslaufkurve, die den wünschenswerterweise stetigen Wandel der Temperaturen des Zapfwassers anzeigt, weil das durch solche Bohrungen austretende Kaltwasser die Wasserschichtung im Speicher zerstört und somit auch zu einer Verschlechterung des Nutzungsgrades führt.

Aufgabe der vorliegenden Erfindung ist es, eine am Speicher nachrüstbare Baugruppe zu schaffen, mit der die erwähnten Nachteile beseitigt werden können.

Erfindungsgemäß wird diese Aufgabe bei einem beheizbaren Brauchwasserspeicher der eingangs näher bezeichneten Art durch die in den kennzeichnenden Merkmalen der unabhängigen Patentansprüche vorhandenen Merkmale gelöst.

Die dadurch im Falle einer Überhitzung des Zapfwassers dem oberen Bereich des Speicherraumes zugeführte, sich mit dem heißen Speicherinhalt vermischende, definierte Kaltwassermenge reicht gerade aus, um die Temperatur in diesem Bereich, von dem die Warmwasserzapfleitung ausgeht, so weit herabzusetzen, daß sie unter den gerade noch zulässigen Grenzwert absinkt. Sobald der Fühler des thermisch gesteuerten Ventils dies erkannt hat, schließt dieses in der Zweigleitung angeordnete Ventil und bleibt geschlossen, solange der Grenzwert von beispeilsweise 70 oder 75 °C nicht überschritten wird.

Bohrungen im Kaltwasserzulauf erübrigen sich dank dieser erfindungsgemäßen Lösung.

Für die Anordnung des Wärmefühlers erschließen sich im Rahmen der Erfindung verschiedenerlei vorteilhatte und durchweg einfach praktikable Möglichkeiten.

Ausführungsbeispiele eines erfindungsgemäßen Speicherbehälters sind in den Zeichnungsfiguren veranschaulicht.

Im einzelnen zeigen:
Figur 1 einen Vertikalschnitt durch einen solchen Behälter und die
Figuren 2 und 3 Varianten der Erfindung in Teilschnitten durch den oberen Bereich des Speicherraumes.

Die zylindrische Wandung 2 eines solchen Speicherbehälters umschließt den Speicherraum 1, der von einer dem Wärmetausch dienenden Abgasführung 3 koaxial durchsetzt wird. Diese Abgasführung 3 schließt an die Oberseite der Brennraumwandung 4 eines seitwärts ansetzenden Brennraumes 5 an, in dem sich ein nicht dargestellter, das gespeicherte Wasser beheizender Brenner befindet.

Im Boden 6 des Speichers ist ein Auslaß 7 vorgesehen.

Die Decke 8 des Speicherbehälters wird von einer den Speicherraum 1 durchsetzenden und in den unteren Bereich des Speicherraumes 1 mündenden Kaltwasser-Zufuhrleitung 9 und von einer vom oberen Bereich dieses Speicherraumes 1 ausgehenden Warmwasser-Zapfleitung 10 durchsetzt.

Von der Kaltwasser-Zufuhrleitung 9 zweigt nun oberhalb der Decke 8 eine Zweigleitung 11 ab, die in den oberen Bereich des Speicherraumes 1 mündet und in der ein thermostatisch, in Abhängigkeit von der Temperatur des im oberen Bereich gespeicherten Wassers gesteuertes, sich bei Überschreitung eines Temperaturgrenzwertes öffnendes Ventil 12 vorgesehen ist.

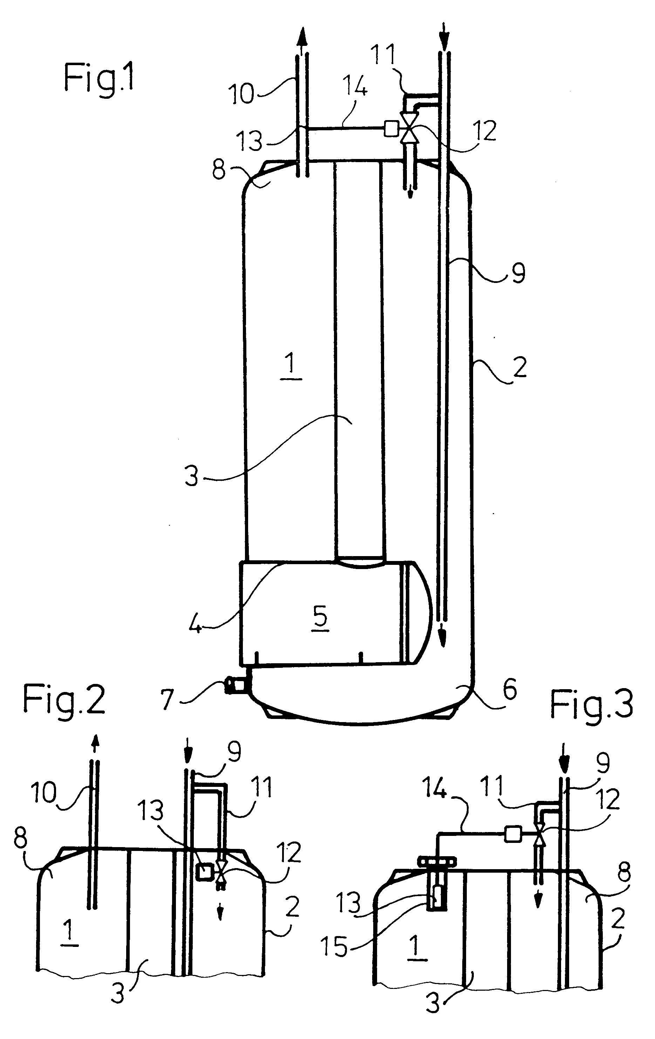

Gemäß der Ausführungsform nach Figur 1 ist der Wärmefühler 13 dieses Ventiles 12 in der Warmwasser-Zapfleitung 10 vorgesehen und über eine der Ventilbetätigung dienende Kapillare 14 mit dem Ventil 12 verbunden.

Gemäß Figur 2 ist der Wärmefühler 13 unmittelbar am beziehungsweise im Ventil 12 selbst vorgesehen, zum Beispiel in diesem Ventil 12 integriert.

Gemäß Figur 3 befindet sich der Wärmefühler 13 innerhalb einer im oberen Bereich des Speicherraumes, also im Bereich der Decke 8, angeordneten Tauchhülse 15.

Bei allen diesen dargestellten Varianten erfüllt das Ventil 12 sinngemäß die gleiche Funktion:

Sobald die Temperatur - zum Beispiel infolge mehrmaliger, kurzfristig aufeinanderfolgender Zapfungen - im oberen Bereich des Speicherraumes 1 einen Grenzwert überschreitet und in eine unzulässige Höhe ansteigt, spricht der von dieser Temperatur beeinflußte Wärmefühler 13 des thermostatisch gesteuerten Ventiles 12 darauf an und öffnet dieses Ventil, so daß aus der Kaltwasser-Zulaufleitung 9 Kaltwasser über die Zweigleitung 11 ausströmt und sich mit dem Heißwasser des obersten Speicherbereiches vermengt und dadurch dessen Temperatur auf einen unterhalb des Grenzwertes liegenden Wert vermindert. Sobald diese Verminderung eintritt und vom Wärmefühler 13 erkannt wurde, schließt das Ventil 12 und Kaltwasser kann im Falle einer Zapfung nur noch über die Mündung der Kaltwasser-Zufuhrleitung 9 in den unteren Bereich des Speicherraumes austreten, ohne dabei die natürliche temperaturbedingte Schichtung des Speicherwassers zu stören.

## Patentansprüche

1. Beheizbarer Brauchwasserspeicher mit einem mit einer Decke versehenen Behälter, mit einer mit einem Temperaturfühler versehenen, den Speicherraum (1) durchsetzenden, in dessen unteren Bereich mündenden, ein Ventil (12) aufweisenden Kaltwasserzufuhrleitung (9) sowie einer von dessen oberem Bereich ausgehenden Warmwasserzapfleitung (10), wobei eine von der Kaltwasserzufuhrleitung (9) abzweigende, in den oberen Bereich des Speicherraumes (1) mündende Zweigleitung (11) mit einem darin angeordneten, thermisch in Abhängigkeit von der Temperatur des im oberen Bereich gespeicherten Wassers gesteuerten, sich bei Überschreitung eines Temperaturgrenzwertes öffnenden Ventil (12) vorgesehen ist, dadurch gekennzeichnet, daß die Kaltwasserzufuhr-, die Warmwasserzapf- und die Zweigleitung durch die Decke des Speichers verlaufen und daß der Wärmefühler (13) dieses Ventils (12) in der Warmwasserzapfleitung (10) vorgesehen ist und daß die Zweigleitung (11) von ihrer Abzweigung bis zum Ventil (12) außerhalb des Speichers (2) verläuft.

2. Beheizbarer Brauchwasserspeicher mit einem mit einer Decke versehenen Behälter, mit einer mit einem Temperaturfühler versehenen, den Speicherraum durchsetzenden, in dessen unteren Bereich mündenden, ein Ventil aufweisenden Kaltwasserzufuhrleitung sowie einer von dessen oberem Bereich ausgehenden Warmwasserzapfleitung, wobei eine von der Kaltwasserzufuhrleitung (9) abzweigende, in den oberen Bereich des Speicherraumes (1) mündende Zweigleitung (11) mit einem darin angeordneten, thermisch in Abhängigkeit von der Temperatur des im oberen Bereich gespeicherten Wassers gesteuerten, sich bei Überschreitung eines Temperaturgrenzwertes öffnenden Ventil (12) vorgesehen ist, dadurch gekennzeichnet, daß die Kaltwasserzufuhr-, die Warmwasserzapf- und die Zweigleitung durch die Decke des Speichers verlaufen und daß der Wärmefühler (13) dieses Ventils (12) und das Ventil selbst im Bereich der Mündung der Zweigleitung (11) im Deckenbereich des Speicherraumes (1) vorgesehen sind und daß die Zweigleitung (11) von ihrer Abzweigung teilweise außerhalb des Speichers (2) verläuft.

3. Beheizbarer Brauchwasserspeicher mit einem mit einer Decke versehenen Behälter, mit einer mit einem Temperaturfühler versehenen, den Speicherraum durchsetzenden, in dessen unteren Bereich mündenden, ein Ventil aufweisenden Kaltwasserzufuhrleitung sowie einer von dessen oberem Bereich ausgehenden Warmwasserzapfleitung, wobei eine von der Kalfwasserzufuhrleitung (9) abzweigende, in den oberen Bereich des Speicherraumes (1) mündende Zweigleitung (11) mit einer darin angeordneten, thermisch in Abhängigkeit von der Temperatur des im oberen Bereich gespeicherten Wassers gesteuerten, sich bei Überschreitung eines Temperaturgrenzwertes öffnenden Ventil (12) vorgesehen ist, dadurch gekennzeichnet, daß die Kaltwasserzufuhr-, die Warmwasserzapf- und die Zweigleitung durch die Decke des Speichers verlaufen und daß der Wärmefühler (13) dieses Ventils (12) und das Ventil selbst in einer in der Speicherdecke (8) angeordneten Tauchhülse (15) angeordnet ist und daß die Zweigleitung (11) von ihrer Abzweigung bis zum Ventil (12) außerhalb des Speichers (2) verläuft.

## Claims

1. A heatable tap water accumulator comprising a vessel, which is provided with a top, a cold water supply line (9), which is provided with a temperature sensor and extends through the storage space (1) and opens in the lower portion thereof and is provided with a valve (12), and a hot water tap line (10), which extends from the upper portion of the storage space (1), wherein a branch line (11) branches from the cold water supply line (9) and opens in the upper portion of the storage apace (1) and contains a valve (12), which is thermally controlled in dependence on the temperature of the water stored in the upper portion and opens in response to a temperature rise above a limit, characterized in that the cold water supply line, the hot water tap line and the branch line extend through the top of the storage vessel, the heat sensor (13) of that valve (12) is contained in the hot water tap line (10) and the branch line (11) extends from its junction to the valve (12) outside the storage vessel (2).

2. A heatable tap water accumulator comprising a vessel, which is provided with a top, a cold water supply line (9), which is provided with a temperature sensor and extends through the storage space (1) and opens in the lower portion thereof and is provided with a valve (12), and a hot water tap line (10), which extends from the upper portion of the storage space (1), wherein a branch line (11) branches from the cold water supply line (9) and opens in the upper portion of the storage space (1) and contains a valve (12), which is thermally controlled in dependence on the temperature of the water stored in the upper portion and opens in response to a temperature rise above a limit, characterized in that the cold water supply line, the hot water tap line and the branch line extend through the top of the storage vessel, the heat sensor (13) of that valve (12) and the valve itself are provided adjacent to the mouth of the branch line (11) adjacent to the top of the storage space (1) and the branch line (11) extends from its junction in part outside the storage vessel (2).

3. A heatable tap water accumulator comprising a vessel, which is provided with a top, a cold water supply line (9), which is provided with a temperature sensor and extends through the storage space (1) and opens in the lower portion thereof and is provided with a valve (12), and hot water tap line (10), which extends from the upper portion of the storage space (1), wherein a branch line (11) branches from the cold water supply line (9) and opens in the upper portion of the storage (1) and contains a valve (12), which is thermally controlled in dependence on the temperature of the water stored in the upper portion and opens in response to a temperature rise above a limit, characterized in that the cold water supply line, the hot water tap line and the branch line extend through the top of the storage vessel, the heat sensor (13) of that valve (12) and the valve itself are disposed in an immersion sleeve (15), which is disposed in the top (8) of the storage vessel, and the branch line (11) extends from its junction to the valve (12) outside the storage vessel (2).

## Revendications

1. Accumulateur d'eau sanitaire pouvant être chauffé, avec un corps muni d'un plafond, et avec un tuyau d'adduction d'eau froide (9) doté d'une sonde thermométrique et traversant l'intérieur (1) de l'accumulateur pour déboucher dans sa partie inférieure et comprenant une valve (12), ainsi qu'avec un tuyau de prélèvement d'eau chaude (10) partant de sa partie supérieure, un tuyau de dérivation (11) étant prévu, partant du tuyau d'eau froide (9) et débouchant dans la partie supérieure de l'intérieur (1) de l'accumulateur, et comportant une valve (12) commandée en fonction de la température de l'eau accumulée dans la partie supérieure, et s'ouvrant lors du dépassement d'une température limite, accumulateur caractérisé par le fait que le tuyau d'adduction d'eau froide, le tuyau de prélèvement d'eau chaude et le tuyau de dérivation percent le plafond de l'accumulateur, et que la sonde thermométrique (13) de la valve (12) est disposée dans le tuyau de prélèvement d'eau chaude (10), et que le tuyau de dérivation (11) se trouve depuis son branchement jusqu'à la valve (12) en dehors de l'accumulateur (2).

2. Accumulateur d'eau sanitaire pouvant être chauffé, avec un corps muni d'un plafond, et avec un tuyau d'adduction d'eau froide (9) doté d'une sonde thermométrique et traversant l'intérieur (1) de l'accumulateur pour déboucher dans sa partie inférieure et comprenant une valve (12), ainsi qu'avec un tuyau de prélèvement d'eau chaude (10) partant de sa partie supérieure, un tuyau de dérivation (11) étant prévu, partant du tuyau d'eau froide (9) et débouchant dans la partie supérieure de l'intérieur (1) de l'accumulateur, et comportant une valve (12) commandée en fonction de la température de l'eau accumulée dans la partie supérieure, et s'ouvrant lors du dépassement d'une température limite, accumulateur caractérisé par le fait que le tuyau d'adduction d'eau froide, le tuyau de prélèvement d'eau chaude et le tuyau de dérivation percent le plafond de l'accumulateur, et que la sonde thermométrique (13) de la valve (12) de même que la valve sont disposées à proximité de l'ouverture du tuyau de dérivation (11) près du plafond de l'intérieur (1) de l'accumulateur, et que le tuyau de dérivation (11) se trouve depuis son branchement en partie en dehors de l'accumulateur (2).

3. Accumulateur d'eau sanitaire pouvant être chauffé, avec un corps muni d'un plafond, et avec un tuyau d'adduction d'eau froide (9) doté d'une sonde thermométrique et traversant l'intérieur (1) de l'accumulateur pour déboucher dans sa partie inférieure et comprenant une valve (12), ainsi qu'avec un tuyau de prélèvement d'eau chaude (10) partant de sa partie supérieure, un tuyau de dérivation (11) étant prévu, partant du tuyau d'eau froide (9) et débouchant dans la partie supérieure de l'intérieur (1) de l'accumulateur, et comportant une valve (12) commandée en fonction de la température de l'eau accumulée dans la partie supérieure, et s'ouvrant lors du dépassement d'une température limite, accumulateur caractérisé par le fait que le tuyau d'adduction d'eau froide, le tuyau de prélèvement d'eau chaude et le tuyau de dérivation percent le plafond de l'accumulateur, et que la sonde thermométrique (13) de la valve (12) de même que la valve sont logées dans une douille immergée (15) montée dans le plafond (8) de l'accumulateur, et que le tuyau de dérivation (11) se trouve depuis son branchement jusqu'à la valve (12) en dehors de l'accumulateur (2).
